(19) Europäisches Patentamt
European Patent Office
Office européen des brevets

(11) **EP 4 611 068 A1**

(12) **EUROPEAN PATENT APPLICATION**
published in accordance with Art. 153(4) EPC

(43) Date of publication:
**03.09.2025 Bulletin 2025/36**

(21) Application number: **24769625.5**

(22) Date of filing: **05.01.2024**

(51) International Patent Classification (IPC):
**H01M 4/485** (2010.01)

(52) Cooperative Patent Classification (CPC):
Y02E 60/10

(86) International application number:
**PCT/CN2024/070831**

(87) International publication number:
**WO 2024/187927 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.03.2023 CN 202310229296**

(71) Applicant: **Contemporary Amperex Technology (Hong Kong) Limited
Central (HK)**

(72) Inventors:
• **SHANG, Yibo**
  **Ningde, Fujian 352100 (CN)**
• **QIN, Yiming**
  **Ningde, Fujian 352100 (CN)**
• **XU, Xiaofu**
  **Ningde, Fujian 352100 (CN)**
• **PAN, Jianfu**
  **Ningde, Fujian 352100 (CN)**
• **PEI, Renjie**
  **Ningde, Fujian 352100 (CN)**
• **ZHANG, Xinyu**
  **Ningde, Fujian 352100 (CN)**
• **LIU, Qian**
  **Ningde, Fujian 352100 (CN)**
• **YE, Yonghuang**
  **Ningde, Fujian 352100 (CN)**

(74) Representative: **Ziebig Hengelhaupt Intellectual Property Attorneys
Patentanwaltskanzlei PartGmbB
Leipziger Straße 49
10117 Berlin (DE)**

(54) **BATTERY AND ELECTRIC DEVICE**

(57) A battery and an electric device. The battery comprises a positive electrode sheet. The positive electrode sheet contains a first positive electrode active material and a second positive electrode active material, and satisfies formula (I), wherein A represents the mass percentage of the second positive electrode active material in the two positive electrode active materials; B represents the proportion, in the whole charging capacity, of charging capacity at 3.7 V or below of the second positive electrode active material measured by a single-particle microelectrode method; C represents the proportion, in the whole charging capacity, of charging capacity at 3.7 V or below of the battery; and R represents the resistance of the positive electrode sheet at 25°C, and the unit of R is $\Omega$.

$$0.1 < \frac{A \times B}{C} \times R \le 0.75$$

(I)

**5**

FIG. 1

EP 4 611 068 A1

**Description**

The present application claims priority to Chinese Patent Application No. 202310229296.3, filed on March 10, 2023, the content of which is incorporated herein by reference in its entirety.

TECHNICAL FIELD

The present application relates to the technical field of lithium batteries, and in particular, to a battery and an electric device.

BACKGROUND

In recent years, with the increasingly widespread application of secondary batteries, they have been extensively used in energy storage power systems such as hydropower, thermal power, wind power, and solar power stations, as well as in various fields such as electric tools, electric bicycles, electric motorcycles, electric vehicles, military equipment, and aerospace. As secondary batteries have achieved great development, higher requirements are placed on their cycle performance, charging speed, and service life.

SUMMARY

The present application is made in view of the problems described above, and its purpose is to provide a battery and an electric device that improve the fast-charging performance and cycle performance of the battery.

In order to achieve the objective described above, a first aspect of the present application provides a battery, including a positive electrode plate. The positive electrode plate includes a first positive electrode active material and a second positive electrode active material, where

the first positive electrode active material includes a compound, $Li_aNi_bCo_cM1_dM2_eO_fE_g$, where

M1 includes one or two elements of Mn and Al;

M2 includes one or more elements of Zr, Zn, Cu, Cr, Mg, Fe, V, Ti, Sr, Sb, Y, W, and Nb;

E includes one or more elements of N, F, S, and Cl;

$0.75 \leq a \leq 1.2$; $0 < b < 1$; $0 < c < 1$; $0 < d < 1$; $0 \leq e \leq 0.2$; $1 \leq f \leq 2.5$, $0 \leq g \leq 1$, and $f + g \leq 3$;

the second positive electrode active material includes a compound, $Li_xH_yMn_{1-z}Q_zP_{1-m}G_mO_{4-n}D_n$, where

H includes one or more elements selected from Zn, Al, Na, K, Mg, Nb, Mo, and W;

Q includes one or more elements selected from Zn, Al, Na, K, Mg, Mo, W, Ti, V, Zr, Fe, Ni, Co, Ga, Sn, Sb, Nb, and Ge;

G includes one or more elements selected from B, Si, N, S, F, Cl, and Br;

D includes one or more elements selected from S, F, Cl, and Br;

[ x is 0.9 to 1.1; y is 0 to 0.1; z is 0.001 to 0.9; m is 0 to 0.1; n is 0 to 0.1;

furthermore, the battery satisfies:

$$0.1 < \frac{A \times B}{C} \times R \leq 0.75$$

where

A represents a mass percentage of the second positive electrode active material in the two positive electrode active materials;

B represents a proportion of charge capacity below 3.7 V of the second positive electrode active material relative to the total charge capacity as measured by a single-particle microelectrode method;

C represents a proportion of charge capacity below 3.7 V of the battery relative to the total charge capacity;

R represents a resistance of the positive electrode plate at 25 °C in $\Omega$.

Therefore, in the present application, the first positive electrode active material and the second positive electrode active material are combined, and $\frac{A \times B}{C} \times R$ is defined between 0.1 and 0.75, such that the proportion of the charge capacity in the low SOC interval (below 3.7 V) of the battery relative to the total charge capacity is increased, and the tolerance boundary of the charging rate in the low SOC interval is improved, and meanwhile, the proportion of the charge capacity in the high SOC interval relative to the total charge capacity is maintained, and the deterioration of the tolerance boundary of the charging rate in the high SOC interval is alleviated, thereby improving the fast-charging performance and cycle performance of the battery.

In any embodiment, $0.25 \leq \frac{A \times B}{C} \times R \leq 0.6$;

optionally,

$$0.3 \leq \frac{A \times B}{C} \times R \leq 0.55.$$

Therefore, a more suitable tolerance boundary of the charging rate in the low SOC interval and a more suitable tolerance boundary of the charging rate in the high SOC interval can be obtained, thereby further improving the fast-charging performance and/or cycle performance of the battery.
In any embodiment, A is 0.1 to 0.5, optionally 0.1 to 0.3, and more optionally 0.2 to 0.3; and/or

B is 0.4 to 0.6, optionally 0.5 to 0.6; and/or

C is 0.05 to 0.23, optionally 0.09 to 0.16; and/or

0 < R < 1, optionally 0.1 to 0.6, and more optionally 0.2 to 0.4.

A, B, and C within the ranges described above can further improve the tolerance boundary of the charging rate in the low SOC interval, and make the tolerance boundary of the charging rate in the high SOC interval more suitable at the same time, thereby further improving the fast-charging performance and/or cycle performance of the battery;

R within the range described above can obtain a relatively low overpotential, which is beneficial for improving the rate capability of the battery and ensuring a smooth charging process.

In any embodiment, in the second positive electrode active material, Q includes one or more elements of Fe, Ti, V, Ni, Co, and Mg; and/or

G includes one or more elements of B, Si, N, and S; and/or

x is 0.977 to 1; and/or

y is 0 to 0.001; and/or

z is 0.1 to 0.9 or 0.001 to 0.6, optionally 0.3 to 0.7; and/or

m is 0 to 0.001 or 0.001 to 0.1; and/or

n is 0 to 0.001 or 0.001 to 0.1.

Therefore, by means of the second positive electrode active material including the Q and G elements described above, the proportion of the charge capacity in the low SOC interval (below 3.7 V) of the battery relative to the total charge capacity can be further increased, and the tolerance boundary of the charging rate in the low SOC interval can be further improved, and meanwhile, the proportion of the charge capacity in the high SOC interval relative to the total charge capacity can be maintained, and the deterioration of the tolerance boundary of the charging rate in the high SOC interval can be alleviated, thereby further improving the fast-charging performance and/or cycle performance of the battery.

In any embodiment, in the first positive electrode active material, a is 0.9 to 1.1; and/or

d is 0.003 to 0.4; and/or

b is 30% to 99.5%, optionally 50% to 99%, and more optionally 55% to 88%; and/or

c is 0.2% to 52%, optionally 0.5% to 49.5%, and more optionally 5% to 35%.

The Ni content within the range described above can improve the fast-charging performance and/or cycle performance of the battery.

The Co content within the range described above can improve the fast-charging performance and/or cycle performance of the battery.

In any embodiment, the first positive electrode material is a single crystal or single-crystal-like material and satisfies:

single crystal particles or single-crystal-like particles have a $D_v50$ particle size of 1.5 to 4.5 $\mu$m, optionally 2 to 4.1 $\mu$m; and/or

the single crystal particles or the single-crystal-like particles have a $D_v99$ particle size of $\leq 18$ $\mu$m, optionally 6.4 to 17.5 $\mu$m, and more optionally 6.5 to 13.5 $\mu$m; and/or

a BET specific surface area of the first positive electrode active material is 0.42 to 1.2 m²/g, optionally 0.5 to 1 m²/g.

When the first positive electrode active material is a single crystal or single-crystal-like material, the $D_v50$ particle size, the $D_v99$ particle size, and the BET specific surface area within the ranges described above are beneficial for increasing active sites of the positive electrode active material, improving the fast-charging performance and power of the battery, helping to reduce side reactions of the positive electrode active material, and improving the cycle performance of the battery.

In any embodiment, the first positive electrode active material is a polycrystalline material and satisfies:

secondary particles have a Dv50 particle size of 6 to 14 $\mu$m, optionally 7 to 13 $\mu$m; and/or

the secondary particles have a Dv99 particle size of < 30 $\mu$m, optionally 14.2 to 28.8 $\mu$m, and more optionally 15.4 to 26.7 $\mu$m; and/or

primary particles have a particle size of 50 to 800 nm, optionally 50 to 600 nm; and/or

a BET specific surface area of the first positive electrode active material is 0.8 to 1.2 m²/g, optionally 0.8 to 1.1 m²/g.

When the first positive electrode active material is a polycrystalline material, the $D_v50$ particle size and $D_v99$ particle size of the secondary particles, the particle size of the primary particles, and the BET specific surface area within the ranges described above are beneficial for increasing active sites of the positive electrode active material, improving the fast-charging performance and power of the battery, helping to reduce side reactions of the positive electrode active material, and improving the cycle performance of the battery.

In any embodiment, the second positive electrode active material is a single crystal or single-crystal-like material and satisfies:

single crystal particles or single-crystal-like particles have a $D_v50$ particle size of 0.2 to 1.6 $\mu$m, optionally 0.25 to 1.49 $\mu$m; and/or

the single crystal particles or the single-crystal-like particles have a $D_v99$ particle size of 5.2 to 33.8 $\mu$m, optionally 6.1 to 25.7 $\mu$m; and/or

a BET specific surface area of the second positive electrode active material is 11.3 to 14.1 m$^2$/g, optionally 12 to 13.7 m$^2$/g.

When the second positive electrode active material is a single crystal or single-crystal-like material, the $D_v50$ particle size, the $D_v99$ particle size, and the BET specific surface area within the ranges described above are beneficial for increasing active sites of the positive electrode active material, improving the fast-charging performance and power of the battery, helping to reduce side reactions of the positive electrode active material, and improving the cycle performance of the battery.

In any embodiment, the first positive electrode active material has a layered structure; and/or the second positive electrode active material has an olivine structure.

In any embodiment, the first positive electrode active material includes a core and a cladding layer coating the core, where the core is the compound $Li_aNi_bCo_cM1_dM2_eO_fE_g$; and/or

the second positive electrode active material includes a core and a cladding layer coating the core, where the core is the compound $Li_xH_yMn_{1-z}Q_zP_{1-m}G_mO_{4-n}D_n$;

optionally, the cladding layers in the first positive electrode active material and the second positive electrode active material independently include one or more of pyrophosphate, phosphate, and carbon.

Therefore, the cladding layers in the first positive electrode active material and/or the second positive electrode active material are beneficial for protecting the cores, thereby reducing the occurrence of side reactions and improving the cycle performance of the battery.

In any embodiment, a mass proportion of the cladding layer in the second positive electrode active material is 0.5% to 2.2%, optionally 1% to 1.9%, and more optionally 1.2% to 1.5%;

optionally, the cladding layer in the second positive electrode active material is carbon.

A second aspect of the present application further provides an electric device, including the battery according to the first aspect of the present application.

BRIEF DESCRIPTION OF THE DRAWINGS

FIG. 1 is a schematic diagram of a secondary battery according to one embodiment of the present application.

FIG. 2 is an exploded view of the secondary battery according to one embodiment of the present application as shown in FIG. 1.

FIG. 3 is a schematic diagram of a battery module according to one embodiment of the present application.

FIG. 4 is a schematic diagram of a battery pack according to one embodiment of the present application.

FIG. 5 is an exploded view of the battery pack according to one embodiment of the present application as shown in FIG. 4.

FIG. 6 is a schematic diagram of an electric device using a secondary battery as a power source according to one embodiment of the present application.

Description of the reference numerals:

1: battery pack; 2: upper case body; 3: lower case body; 4: battery module; 5: secondary battery; 51: housing; 52: electrode assembly; 53: top cover assembly.

DETAILED DESCRIPTION

Hereinafter, embodiments of the battery, the battery module, and the electric device of the present application are specifically disclosed in detail with appropriate reference to the drawings. However, unnecessary detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" represents an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

Unless otherwise specified, the term "$D_v50$ particle size" in the present application refers to a particle size at which the cumulative volume reaches 50% from the small particle size side in a volume-based particle size distribution.

Unless otherwise specified, the term "$D_v99$ particle size" in the present application refers to a particle size at which the cumulative volume reaches 99% from the small particle size side in a volume-based particle size distribution.

Unless otherwise specified, the term "single crystal or single-crystal-like material particle" in the present application refers to a single particle (i.e., a primary particle).

Unless otherwise specified, the terms "secondary particle" and "polycrystalline material particle" in the present application generally have similar meanings, referring to a particle formed by agglomeration of more than 100 primary particles with an average particle size in the range of 50-800 nm.

Unless otherwise specified, in the present application, if the number and average particle size of the primary particles in more than 50% (including 50%) of the collected agglomerated particles meet the definition of "polycrystalline material particle" described above, the positive electrode active material is a polycrystalline material; otherwise, it is a single crystal or single-crystal-like material.

[Secondary Battery]

Secondary batteries, also known as rechargeable batteries or storage batteries, refer to batteries that can continue to be used by reactivating their active materials through charging after discharging.

Typically, a secondary battery includes a positive electrode plate, a negative electrode plate, a separation film, and an electrolytic solution. During the charging and discharging process of the battery, active ions (such as lithium ions) are intercalated and deintercalated back and forth between the positive electrode plate and the negative electrode plate. The separation film is set between the positive electrode plate and the negative electrode plate to primarily prevent the positive and negative electrodes from short-circuiting, while allowing the passage of active ions. The electrolytic solution is between the positive electrode plate and the negative electrode plate, and primarily functions to conduct active ions.

One embodiment of the present application provides a battery, including a positive electrode plate. The positive electrode plate includes a first positive electrode active material and a second positive electrode active material, where

the first positive electrode active material includes a compound, $Li_aNi_bCo_cM1_dM2_eO_fE_g$, where

M1 includes one or two elements of Mn and Al;

M2 includes one or more elements of Zr, Zn, Cu, Cr, Mg, Fe, V, Ti, Sr, Sb, Y, W, and Nb;

E includes one or more elements of N, F, S, and Cl;

$0.75 \le a \le 1.2$; $0 < b < 1$; $0 < c < 1$; $0 < d < 1$; $0 \le e \le 0.2$; $1 \le f \le 2.5$, $0 \le g \le 1$, and $f + g \le 3$;

the second positive electrode active material includes a compound, $Li_xH_yMn_{1-z}Q_zP_{1.\,m}G_mO_{4-n}D_n$, where

H includes one or more elements selected from Zn, Al, Na, K, Mg, Nb, Mo, and W;

Q includes one or more elements selected from Zn, Al, Na, K, Mg, Mo, W, Ti, V, Zr, Fe, Ni, Co, Ga, Sn, Sb, Nb, and Ge;

G includes one or more elements selected from B, Si, N, S, F, Cl, and Br;

D includes one or more elements selected from S, F, Cl, and Br;

x is 0.9 to 1.1; y is 0 to 0.1; z is 0.001 to 0.9; m is 0 to 0.1; n is 0 to 0.1;

furthermore, the battery satisfies:

$$0.1 < \frac{A \times B}{C} \times R \le 0.75$$

where

A represents a mass percentage of the second positive electrode active material in the two positive electrode active materials;

B represents a proportion of charge capacity below 3.7 V of the second positive electrode active material relative to the total charge capacity as measured by a single-particle microelectrode method;

C represents a proportion of charge capacity below 3.7 V of the battery relative to the total charge capacity;

R represents a resistance of the positive electrode plate at 25 °C in Ω.

The diffusion coefficient of the first positive electrode active material in the low SOC interval (below 3.7 V) is small, resulting in a relatively narrow tolerance boundary of the charging rate of the battery in the low SOC interval, thereby affecting the fast-charging performance of the battery. Although the mechanism is not clear, the applicant unexpectedly discovered that in the present application, the first positive electrode active material and the second positive electrode active material are combined, and $\frac{A \times B}{C} \times R$ is defined between 0.1 and 0.75, such that the proportion of the charge capacity in the low SOC interval (below 3.7 V) of the battery relative to the total charge capacity is increased, and the tolerance boundary of the charging rate in the low SOC interval is improved, and meanwhile, the proportion of the charge capacity in the high SOC interval relative to the total charge capacity is maintained, and the deterioration of the tolerance boundary of the charging rate in the high SOC interval is alleviated, thereby improving the fast-charging performance and cycle performance of the battery.

In some embodiments, $0.25 \le \frac{A \times B}{C} \times R \le 0.6$;

optionally,

$$0.3 \le \frac{A \times B}{C} \times R \le 0.55;$$

for example, $\frac{A \times B}{C} \times R$ may be 0.1, 0.2, 0.23, 0.3, 0.32, 0.38, 0.4, 0.43, 0.45, 0.49, 0.5, 0.52, 0.53, 0.6, 0.7, 0.73, 0.75, and a range formed by any of the values described above.

Therefore, a more suitable tolerance boundary of the charging rate in the low SOC interval and a more suitable tolerance boundary of the charging rate in the high SOC interval can be obtained, thereby further improving the fast-charging performance and/or cycle performance of the battery.

In some embodiments, A is 0.1 to 0.5, optionally 0.1 to 0.3, and more optionally 0.2 to 0.3, for example, it may be 0.1, 0.2, 0.3, 0.4, 0.5, and a range formed by any of the values described above; and/or

B is 0.4 to 0.6, optionally 0.5 to 0.6, for example, it may be 0.4, 0.45, 0.48, 0.5, 0.55, 0.57, 0.6, and a range formed by any of the values described above; and/or

C is 0.05 to 0.23, optionally 0.09 to 0.16, for example, it may be 0.09, 0.1, 0.13, 0.16, 0.18, 0.2, 0.21, 0.23, and a range formed by any of the values described above; and/or

$0 < R < 1$, optionally 0.1 to 0.6, and more optionally 0.2 to 0.4, for example, it may be 0.1, 0.2, 0.3, 0.4, 0.5, 0.6, and a range formed by any of the values described above.

In some embodiments, a capacity-voltage curve for the discharging process is measured, where the X-axis represents the charge capacity; the Y-axis represents the voltage; the maximum value of the Y-axis represents the full charge voltage V1, the minimum value of the Y-axis represents the full discharge voltage V2, and V2 < 3.7 V < V1; the capacity corresponding to the voltage of 3.7 V in the curve is Q1; the capacity Q2 corresponding to the full discharge voltage V2 represents "total charge capacity"; Q2 - Q1 represents "charge capacity below 3.7 V"; and Q1 represents "charge capacity in the high SOC interval".

In some embodiments, B represents the proportion of the charge capacity below 3.7 V of the second positive electrode active material relative to the total charge capacity measured by the single-particle microelectrode method at 25 °C.

In some embodiments, C represents the proportion of the charge capacity below 3.7 V of the battery relative to the total charge capacity as measured at 25 °C.

In some embodiments, the charge capacity below 3.7 V and the total charge capacity of the second positive electrode active material are measured by the single-particle microelectrode method, which is a commonly used method in the art. Specifically, the single-particle microelectrode method primarily comprises a microelectrode, a microscope, a micromanipulator, and an electrochemical workstation. For example, by combining the micromanipulator with the microscope, the microelectrode is moved to make contact with a single particle of the second positive electrode active material; and an electrochemical test is then performed at a certain temperature using the single particle as a working electrode, a lithium ribbon as a counter electrode and a reference electrode, and a certain electrolytic solution, so as to obtain the capacity-voltage curve for the discharging process.

In some embodiments, the charge capacity below 3.7 V and the total charge capacity of the battery can be measured by conventional methods in the art. For example, after three charge/discharge cycles, the charge capacity below 3.7 V and the total charge capacity of the battery are obtained from the capacity-voltage curve for the third discharging process.

In some embodiments, R can be measured by conventional methods and devices in the art. for example, the test is performed using a BER1300 sheet resistance tester at a test temperature of 25 °C.

A, B, and C within the ranges described above can further improve the tolerance boundary of the charging rate in the low SOC interval, and make the tolerance boundary of the charging rate in the high SOC interval more suitable at the same time, thereby further improving the fast-charging performance and/or cycle performance of the battery;

R within the range described above can obtain a relatively low overpotential, which is beneficial for improving the rate capability of the battery and ensuring a smooth charging process.

In some embodiments, in the second positive electrode active material, Q includes one or more elements of Fe, Ti, V, Ni, Co, and Mg; and/or

G includes one or more elements of B, Si, N, and S; and/or

x is 0.977 to 1, for example, it may be 0.977, 0.98, 0.985, 0.99, 0.992, 0.994, 1, and a range formed by any of the values described above; and/or

y is 0 to 0.001, for example, it may be 0, 0.0005, 0.001, and a range formed by any of the values described above;

and/or

z is 0.1 to 0.9 or 0.001 to 0.6, optionally 0.3 to 0.7, for example, it may be 0.001, 0.005, 0.01, 0.05, 0.1, 0.2, 0.3, 0.4, 0.5, 0.6, 0.7, 0.8, 0.9, and a range formed by any of the values described above; and/or

m is 0 to 0.001 or 0.001 to 0.1, for example, it may be 0, 0.0005, 0.001, 0.005, 0.01, 0.02, 0.04, 0.05, 0.07, 0.08, 0.1, and a range formed by any of the values described above; and/or

n is 0 to 0.001 or 0.001 to 0.1, for example, it may be 0, 0.0005, 0.001, 0.005, 0.01, 0.02, 0.04, 0.05, 0.07, 0.08, 0.1, and a range formed by any of the values described above.

Therefore, by means of the second positive electrode active material including the Q and G elements described above, the proportion of the charge capacity in the low SOC interval (below 3.7 V) of the battery relative to the total charge capacity can be further increased, and the tolerance boundary of the charging rate in the low SOC interval can be further improved, and meanwhile, the proportion of the charge capacity in the high SOC interval relative to the total charge capacity can be maintained, and the deterioration of the tolerance boundary of the charging rate in the high SOC interval can be alleviated, thereby further improving the fast-charging performance and/or cycle performance of the battery.

In some embodiments, in the first positive electrode active material, a is 0.9 to 1.1, for example, it may be 0.75, 0.8, 0.85, 0.9, 0.95, 1, 1.1, 1.2, and a range formed by any of the values described above; and/or

d is 0.003 to 0.4, for example, it may be 0.003, 0.005, 0.008, 0.01, 0.03, 0.04, 0.05, 0.07, 0.1, 0.13, 0.15, 0.2, 0.24, 0.26, 0.3, 0.33, 0.35, 0.38, 0.4, and a range formed by any of the values described above; and/or

b is 30% to 99.5%, optionally 50% to 99%, and more optionally 55% to 88%, for example, it may be 0.3, 0.4, 0.5, 0.6, 0.7, 0.8, 0.9, 0.95, 0.995, and a range formed by any of the values described above; and/or

c is 0.2% to 52%, optionally 0.5% to 49.5%, and more optionally 5% to 35%, for example, it may be 0.002, 0.005, 0.008, 0.01, 0.03, 0.06, 0.08, 0.1, 0.15, 0.2, 0.25, 0.3, 0.35, 0.4, 0.45, 0.48, 0.5, 0.52, and a range formed by any of the values described above.

The Ni content within the range described above can improve the fast-charging performance and/or cycle performance of the battery.

The Co content within the range described above can improve the fast-charging performance and/or cycle performance of the battery.

In some embodiments, the first positive electrode material is a single crystal or single-crystal-like material and satisfies:

single crystal particles or single-crystal-like particles have a $D_v50$ particle size of 1.5 to 4.5 $\mu$m, optionally 2 to 4.1 $\mu$m, for example, the $D_v50$ particle size may be 1.5 $\mu$m, 2 $\mu$m, 2.5 $\mu$m, 3 $\mu$m, 3.2 $\mu$m, 3.5 $\mu$m, 4 $\mu$m, 4.2 $\mu$m, 4.5 $\mu$m, and a range formed by any of the values described above; and/or

the single crystal particles or the single-crystal-like particles have a $D_v99$ particle size of $\leq 18$ $\mu$m, optionally 6.4 to 17.5 $\mu$m, and more optionally 6.5 to 13.5 $\mu$m, for example, the $D_v99$ particle size may be 1 $\mu$m, 2 $\mu$m, 3 $\mu$m, 4 $\mu$m, 5 $\mu$m, 5.5 $\mu$m, 6 $\mu$m, 6.4 $\mu$m, 7 $\mu$m, 7.5 $\mu$m, 8 $\mu$m, 8.5 $\mu$m, 9 $\mu$m, 9.5 $\mu$m, 10 $\mu$m, 10.4 $\mu$m, 11 $\mu$m, 11.6 $\mu$m, 12 $\mu$m, 12.5 $\mu$m, 13 $\mu$m, 13.6 $\mu$m, 14 $\mu$m, 14.5 $\mu$m, 15 $\mu$m, 15.5 $\mu$m, 16 $\mu$m, 16.4 $\mu$m, 17 $\mu$m, 17.5 $\mu$m, 18 $\mu$m, and a range formed by any of the values described above; and/or

a BET specific surface area of the first positive electrode active material is 0.42 to 1.2 $m^2/g$, optionally 0.5 to 1 $m^2/g$, for example, it may be 0.42 $m^2/g$, 0.47 $m^2/g$, 0.5 $m^2/g$, 0.55 $m^2/g$, 0.58 $m^2/g$, 0.6 $m^2/g$, 0.65 $m^2/g$, 0.68 $m^2/g$, 0.7 $m^2/g$, 0.75 $m^2/g$, 0.8 $m^2/g$, 0.85 $m^2/g$, 0.9 $m^2/g$, 0.95 $m^2/g$, 1.0 $m^2/g$, 1.1 $m^2/g$, 1.2 $m^2/g$, and a range formed by any of the values described above.

When the first positive electrode active material is a single crystal or single-crystal-like material, the $D_v50$ particle size, the $D_v99$ particle size, and the BET specific surface area within the ranges described above are beneficial for increasing active sites of the positive electrode active material, improving the fast-charging performance and power of the battery, helping to reduce side reactions of the positive electrode active material, and improving the cycle performance of the battery.

In some embodiments, the first positive electrode active material is a polycrystalline material and satisfies:

secondary particles have a Dv50 particle size of 6 to 14 μm, optionally 7 to 13 μm, for example, 6 μm, 7 μm, 8 μm, 9 μm, 10 μm, 11 μm, 12 μm, 13 μm, 14 μm, and a range formed by any of the values described above; and/or

the secondary particles have a Dv99 particle size of < 30 μm, optionally 14.2 to 28.8 μm, and more optionally 15.4 to 26.7 μm, for example, the Dv99 particle size may be 6 μm, 10 μm, 11 μm, 13 μm, 15 μm, 17 μm, 18 μm, 20 μm, 21 μm, 22 μm, 24 μm, 26 μm, 27 μm, 28 μm, 29 μm, and a range formed by any of the values described above; and/or

primary particles have a particle size of 50 to 800 nm, optionally 50 to 600 nm, for example, the particle size may be 50 nm, 55 nm, 60 nm, 65 nm, 70 nm, 80 nm, 90 nm, 100 nm, 120 nm, 150 nm, 200 nm, 240 nm, 260 nm, 300 nm, 350 nm, 400 nm, 450 nm, 500 nm, 550 nm, 600 nm, 650 nm, 700 nm, 750 nm, 800 nm, and a range formed by any of the values described above; and/or

a BET specific surface area of the first positive electrode active material is 0.8 to 1.2 $m^2/g$, optionally 0.8 to 1.1 $m^2/g$, for example, it may be 0.85 $m^2/g$, 0.9 $m^2/g$, 0.95 $m^2/g$, 0.98 $m^2/g$, 1.0 $m^2/g$, 1.05 $m^2/g$, 1.1 $m^2/g$, 1.2 $m^2/g$, and a range formed by any of the values described above.

When the first positive electrode active material is a polycrystalline material, the $D_v50$ particle size and $D_v99$ particle size of the secondary particles, the particle size of the primary particles, and the BET specific surface area within the ranges described above are beneficial for increasing active sites of the positive electrode active material, improving the fast-charging performance and power of the battery, helping to reduce side reactions of the positive electrode active material, and improving the cycle performance of the battery.

In some embodiments, the second positive electrode active material is a single crystal or single-crystal-like material and satisfies:

single crystal particles or single-crystal-like particles have a $D_v50$ particle size of 0.2 to 1.6 μm, optionally 0.25 to 1.49 μm, for example, the $D_v50$ particle size may be 0.3 μm, 0.4 μm, 0.5 μm, 0.6 μm, 0.7 μm, 0.8 μm, 0.9 μm, 1.0 μm, 1.1 μm, 1.2 μm, 1.3 μm, 1.4 μm, 1.5 μm, 1.6 μm, and a range formed by any of the values described above; and/or

the single crystal particles or the single-crystal-like particles have a $D_v99$ particle size of 5.2 to 33.8 μm, optionally 6.1 to 25.7 μm, for example, 5.2 μm, 5.5 μm, 6 μm, 6.5 μm, 7 μm, 7.5 μm, 8 μm, 8.5 μm, 9 μm, 9.5 μm, 10 μm, 10.5 μm, 11 μm, 12 μm, 13 μm, 14 μm, 15 μm, 16 μm, 18 μm, 20 μm, 22 μm, 24 μm, 26 μm, 28 μm, 30 μm, 31 μm, 33 μm, 33.8 μm, and a range formed by any of the values described above; and/or

a BET specific surface area of the second positive electrode active material is 11.3 to 14.1 $m^2/g$, optionally 12 to 13.7 $m^2/g$, for example, it may be 11.3 $m^2/g$, 11.5 $m^2/g$, 12 $m^2/g$, 12.5 $m^2/g$, 12.8 $m^2/g$, 13 $m^2/g$, 13.6 $m^2/g$, 14 $m^2/g$, 14.1 $m^2/g$, and a range formed by any of the values described above.

When the second positive electrode active material is a single crystal or single-crystal-like material, the $D_v50$ particle size, the $D_v99$ particle size, and the BET specific surface area within the ranges described above are beneficial for increasing active sites of the positive electrode active material, improving the fast-charging performance and power of the battery, helping to reduce side reactions of the positive electrode active material, and improving the cycle performance of the battery.

In some embodiments, the crystal form can be determined by conventional methods in the art. For example, a sample is tested using a scanning electron microscope, and the magnification is adjusted, such that the field of view contains more than 10 agglomerated particles; the number of primary particles composing each agglomerated particle is counted, and the size of the primary particle in a length direction is measured using a scale and recorded as the particle size; the particle sizes of the primary particles in each agglomerated particle are sorted from large to small; and 1/10 of the maximum particle size data and 1/10 of the minimum particle size data are excluded, and the average of the remaining particle size data is taken as the average particle size of the primary particles in the agglomerated particle. If the number and average particle size of the primary particles in more than 50% (including 50%) of the agglomerated particles meet the foregoing definition of "polycrystalline material particle", the sample is determined to be a polycrystalline material; otherwise, it is determined to be a single crystal or single-crystal-like material. The average particle size of the primary particles is taken as the particle size of the primary particles of the polycrystalline material.

In some embodiments, the $D_v50$ particle size and the $D_v99$ particle size can be measured by conventional methods in the art, for example, according to the method in the national standard GB/T 19077-2016 "Particle Size Analysis - Laser Diffraction Methods".

In some embodiments, the BET specific surface area is a BET specific surface area at 25 °C.

In some embodiments, the BET specific surface area can be measured by conventional methods in the art, for example, according to the method in the national standard GB/T 19587-2004 "Determination of the Specific Surface Area of Solids by Gas Adsorption Using the BET Method".

In some embodiments, the first positive electrode active material has a layered structure; and/or the second positive electrode active material has an olivine structure.

In some embodiments, the first positive electrode active material includes a core and a cladding layer coating the core, where the core is the compound $Li_aNi_bCo_cM1_dM2_eO_fE_g$; and/or

the second positive electrode active material includes a core and a cladding layer coating the core, where the core is the compound $Li_xH_yMn_{1-z}Q_zP_{1-m}G_mO_{4-n}D_n$;

optionally, the cladding layers in the first positive electrode active material and the second positive electrode active material independently include one or more of pyrophosphate, phosphate, and carbon.

Therefore, the cladding layers in the first positive electrode active material and/or the second positive electrode active material are beneficial for protecting the cores, thereby reducing the occurrence of side reactions and improving the cycle performance of the battery.

In some embodiments, a mass proportion of the cladding layer in the second positive electrode active material is 0.5% to 2.2%, optionally 1% to 1.9%, and more optionally 1.2% to 1.5%;

optionally, the cladding layer in the second positive electrode active material is carbon.

In some embodiments, the battery includes a negative electrode plate. The negative electrode plate includes a negative electrode current collector and a negative electrode film layer disposed on at least one surface of the negative electrode current collector, and the negative electrode film layer includes a negative electrode active material, where

the negative electrode active material has a coating surface density of 9 to 11 mg/cm, optionally 9.5 to 10.5 mg/cm², and more optionally 10.0 to 10.4 mg/cm; and/or

the negative electrode film layer has a density of 1.55 to 1.75 $g/cm^3$, optionally 1.6 to 1.7 $g/cm^3$, and more optionally 1.64 to 1.69 $g/cm^3$.

The coating surface density of the negative electrode active material within the range described above is beneficial for improving the fast-charging rate capability of the battery, improving the charging CB of the battery, and alleviating the lithium plating problem of the negative electrode plate. The density of the negative electrode film layer within the range described above is beneficial for improving the lithium intercalation capacity of the negative electrode plate and the contact between the negative electrode active material and a conductive agent, thereby improving the fast-charging rate capability and/or cycle performance of the battery.

In some embodiments, the "coating surface density of the negative electrode active material" refers to the weight of the negative electrode active material per unit area of the negative electrode plate.

[Positive Electrode Plate]

A positive electrode plate generally includes a positive electrode current collector and a positive electrode film layer disposed on at least one surface of the positive electrode current collector, and the positive electrode film layer includes the first positive electrode active material and the second positive electrode active material described above.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector can be fabricated by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

[Negative Electrode Plate]

The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector can be fabricated by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other traditional materials that can be used as negative electrode active materials for batteries may also be used. These negative electrode active materials may be used alone or in combination of two or more.

In some embodiments, the negative electrode film layer further optionally includes a binder. As an example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components in a solvent (such as deionized water) to form a negative electrode slurry; applying the negative electrode slurry on the negative electrode current collector, and performing drying, cold pressing, and other processes, such that the negative electrode plate can be obtained.

[Electrolyte]

The electrolyte conducts ions between the positive electrode plate and the negative electrode plate. The present application has no specific restrictions on the type of the electrolyte, which can be selected according to needs. For example, the electrolyte may be liquid, gel, or all solid.

In some embodiments, the electrolyte is liquid and includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolytic solution further optionally includes an additive. As an example, the additive may include a negative electrode film-forming additive, a positive electrode film-forming additive, and may also include an additive capable of improving certain properties of the battery, such as an additive for improving the overcharge performance of the battery, an additive for improving the high- or low-temperature performance of the battery, or the like.

[Separation Film]

In some embodiments, the secondary battery further includes a separation film. The present application does not particularly limit the type of the separation film, and any porous-structure separation film known to have good chemical stability and mechanical stability may be selected and used.

In some embodiments, the separation film may be made of a material selected from at least one of glass fiber, non-woven fabric, polyethylene, polypropylene, and polyvinylidene difluoride. The separation film may be a single-layer film or a multi-layer composite film, and there is no particular limitation on this. When the separation film is a multi-layer composite film, the materials of the layers may be the same or different, and there is no particular limitation on this.

In some embodiments, the positive electrode plate, the negative electrode plate, and the separation film may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging of the secondary battery may be a hard shell, such as a hard plastic shell, an aluminum shell, a steel shell, or the like. The outer packaging of the secondary battery may also be a soft pack, such as a pouch-type soft pack. The soft pack may be made of plastic, and examples of the plastic include polypropylene, polybutylene terephthalate, polybutylene succinate, and the like.

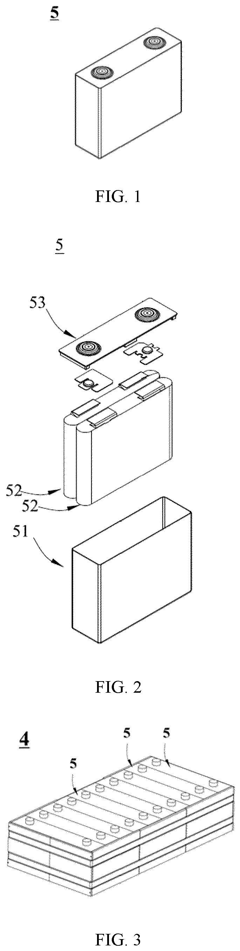

The present application does not particularly limit the shape of the secondary battery, and it may have a cylindrical shape, a prismatic shape, or any other shape. For example, FIG. 1 shows a secondary battery 5 having a prismatic structure as one example.

In some embodiments, referring to FIG. 2, the outer packaging may include a housing 51 and a cover plate 53. The housing 51 may include a bottom plate and a side plate connected to the bottom plate, and the bottom plate and the side plate define an accommodating cavity. The housing 51 is provided with an opening communicating with the accommodating cavity, and the cover plate 53 is capable of lidding the opening to close the accommodating cavity. The positive electrode plate, the negative electrode plate, and the separation film may be subjected to a winding process or a stacking process to form an electrode assembly 52. The electrode assembly 52 is packaged in the accommodating cavity. The electrolytic solution is infiltrated into the electrode assembly 52. The number of the electrode assembly 52 included in the secondary battery 5 may be one or more, and those skilled in the art can select the number according to specific and actual needs.

In some embodiments, the secondary battery may be assembled into a battery module. The number of secondary batteries included in the battery module may be one or more, and the specific number may be selected by those skilled in the art based on the use and capacity of the battery module.

FIG. 3 shows a battery module 4 as one example. Referring to FIG. 3, in the battery module 4, a plurality of secondary batteries 5 may be sequentially arranged in a length direction of the battery module 4. Certainly, the arrangement may also be in any other manner. Further, the plurality of secondary batteries 5 may be fixed by a fastener.

Optionally, the battery module 4 may further include a shell having an accommodating space in which the plurality of secondary batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

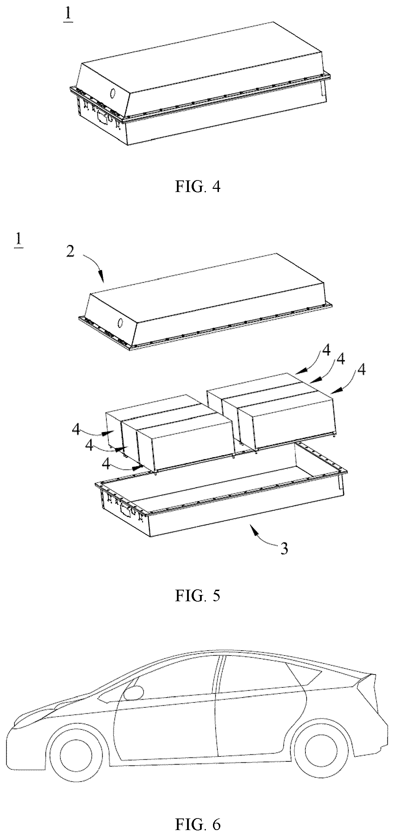

FIG. 4 and FIG. 5 show a battery pack 1 as one example. Referring to FIG. 4 and FIG. 5, the battery pack 1 may include a battery case and a plurality of battery modules 4 disposed in the battery case. The battery case includes an upper case body 2 and a lower case body 3. The upper case body 2 is capable of covering the lower case body 3 to form a closed space for accommodating the battery modules 4. The plurality of battery modules 4 may be arranged in any manner in the battery case.

In the present application, the battery may include, but is not limited to, a secondary battery, a battery module, and a battery pack.

In addition, the present application further provides an electric device. The electric device includes at least one of the secondary battery, the battery module, or the battery pack provided in the present application. The secondary battery, the battery module, or the battery pack may be used as a power source for the electric device, and they may also be used as an energy storage unit for the electric device. The electric device may include, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As an electric device, a secondary battery, a battery module, or a battery pack may be selected based on its use requirements.

FIG. 6 shows an electric device as one example. The electric device is a pure electric vehicle, a hybrid electric vehicle, a plug-in hybrid electric vehicle, or the like. To meet the requirements of the electric device for high power and high energy density, the battery pack or the battery module may be used.

[Examples]

Hereinafter, examples of the present application are described. The examples described below are illustrative and are merely used to explain the present application, and they should not be construed as limiting the present application. Examples without techniques or conditions specified therein are implemented according to techniques or conditions described in the literature in the art or according to product instructions. Reagents or instruments used herein without specified manufacturers are all commercially available conventional products.

Example 1

(1) First positive electrode active material: It was purchased from Guangdong Brunp Recycling Technology Co., Ltd.

(2) Second positive electrode active material: It was purchased from Shenzhen Dynanonic Co., Ltd.

(3) Preparation of positive electrode plate: The first positive electrode active material, the second positive electrode active material, polyvinylidene difluoride (PVDF), and conductive carbon were added to N-methylpyrrolidone (NMP) in a mass ratio of 63:27:5:5; the mixture was stirred in a drying room to form a homogeneous slurry, with a viscosity controlled to be 3000-10000 mPa·S; a positive electrode current collector aluminum foil was coated with the slurry described above; and the aluminum foil was dried to form a positive electrode plate.

(4) Preparation of negative electrode plate: Graphite, sodium carboxymethylcellulose (CMC), styrene-butadiene rubber (SBR), and conductive carbon were added to deionized water in a mass ratio of 90:2:3:5; the mixture was stirred to form a homogeneous slurry, with a viscosity controlled to be 3000-10000 mPa·S; a negative electrode current collector copper foil was coated with the negative electrode slurry described above; and the copper foil was dried to form a negative electrode plate.

(5) Separation film: Polyethylene (PE) porous polymer film was used.

(6) Preparation of electrolytic solution: Ethylene carbonate (EC), diethyl carbonate (DEC), and dimethyl carbonate (DMC) were mixed in a volume ratio of 1:1:1, and then $LiPF_6$ and fluoroethylene carbonate (FEC) were uniformly dissolved in the solution described above to obtain an electrolytic solution. In the electrolytic solution, the concentration of $LiPF_6$ was 1 mol/L, and the content of fluoroethylene carbonate (FEC) was 5 wt.%.

(7) Preparation of soft-pack laminated battery: The positive electrode plate, the negative electrode plate, and the separation film described above were made into a corresponding battery cell according to a Z-shaped laminated structure, and the battery cell was dried in vacuum at 90 °C for 12 h, followed by ultrasonic welding of positive and negative electrode tabs; an aluminum tab was used for the positive electrode, and a nickel tab was used for the negative electrode; the positive and negative electrode tabs were located on the same side of the battery cell; after the tabs were welded, the battery cell was placed into an aluminum-plastic film with an appropriate size for top-side packaging, and the conventional packaging temperature was 145 °C; and the battery cell was then injected with an electrolytic solution, left to stand, and subjected to formation, aging, degassing, secondary packaging, and capacity testing to obtain the prepared soft-pack laminated battery.

The secondary batteries of Examples 2-41 and Comparative Examples 1-2 were prepared using methods similar to that of Example 1, and the different product parameters are detailed in Table 1. Here:

A represents a mass percentage of the second positive electrode active material in the two positive electrode active materials;

B represents a proportion of charge capacity below 3.7 V of the second positive electrode active material relative to the total charge capacity as measured by a single-particle microelectrode method;

C represents a proportion of charge capacity below 3.7 V of the battery relative to the total charge capacity;

R represents a resistance of the positive electrode plate at 25 °C ($\Omega$).

In Table 1, the first positive electrode active materials have a layered structure, all of which were purchased from Guangdong Brunp Recycling Technology Co., Ltd.; the second positive electrode active materials of Examples 1-38 have an olivine structure, all of which were purchased from Shenzhen Dynanonic Co., Ltd.

Preparation method for second positive electrode active material of Example 39

Preparation of doped manganese oxalate: 1.3 mol of $MnSO_4 \cdot H_2O$ and 0.7 mol of $FeSO_4 \cdot H_2O$ were thoroughly mixed in a mixer for 6 h. The mixture was transferred to a reaction kettle, and 10 L of deionized water and 2 mol of oxalic acid dihydrate (calculated as oxalic acid) were added. The reaction kettle was heated to 80 °C, and the mixture was stirred at 600 rpm for 6 h until the reaction was terminated (no bubble was generated) to obtain a manganese oxalate suspension doped with Fe. The suspension was then filtered, and the filter cake was dried at 120 °C. The dried material was then ground to obtain Fe-doped manganese oxalate particles with a median particle size $Dv_{50}$ of about 100 nm.
Preparation of doped lithium manganese phosphate: 1 mol of the manganese oxalate particles described above, 0.497 mol of lithium carbonate, 0.001 mol of $Mo(SO_4)_3$, 85% phosphoric acid aqueous solution containing 0.999 mol of phosphoric acid, 0.001 mol of $H_4SiO_4$, 0.0005 mol of $NH_4HF_2$, and 0.005 mol of sucrose were added to 20 L of deionized water. The mixture was transferred to a sand mill and thoroughly ground and stirred for 10 h to obtain a slurry. The slurry was transferred to a spray drying device for spray drying and granulation. The drying temperature was set at 250 °C, and the mixture was dried for 4 h to obtain particles. The powder described above was sintered at 700 °C for 10 h under a nitrogen (90% by volume) + hydrogen (10% by volume) protective atmosphere. The element content of the positive electrode active material can be detected by inductively coupled plasma (ICP) optical emission spectroscopy.

Preparation method for second positive electrode active material of Example 40

Except for changing the amount of high-purity $Li_2CO_3$ to 0.4885 mol, replacing $Mo(SO_4)_3$ with $MgSO_4$, changing the amount of $FeSO_4 \cdot H_2O$ to 0.68 mol, adding 0.02 mol of $Ti(SO_4)_2$ during the preparation of the doped manganese oxalate, and replacing $H_4SiO_4$ with $HNO_3$, the other steps were the same as the preparation method for the second positive electrode active materials of Examples 1-36. The element content of the positive electrode active material can be detected by inductively coupled plasma (ICP) optical emission spectroscopy.

Preparation method for second positive electrode active material of Example 41

Except for changing the amount of high-purity $Li_2CO_3$ to 0.496 mol, replacing $M_O(SO_4)_3$ with $W(SO_4)_3$, and replacing $H_4SiO_4$ with $H_2SO_4$, the other steps were the same as the preparation method for the second positive electrode active materials of Examples 1-36. The element content of the positive electrode active material can be detected by inductively coupled plasma (ICP) optical emission spectroscopy.

## Table 1: Parameter results of Examples 1-41 and Comparative Examples 1-2

| | First positive electrode active material | | | | Single crystal particles | | Secondary particles | | Particle size of primary particles (nm) | BET (m²/g) | Material structure | Second positive electrode active material | | Dv50 (μm) | Dv99 (μm) | BET (m²/g) | Material structure | A | B | C | R | A×B×R/C | Negative electrode active material | Coating surface density (mg/cm²) | Density of negative electrode film layer (g/cm³) |
|---|---|---|---|---|---|---|---|---|---|---|---|---|---|---|---|---|---|---|---|---|---|---|---|---|---|
| | Substance | b | c | Crystal form | Dv50 (μm) | Dv99 (μm) | Dv50 (μm) | Dv99 (μm) | | | | Substance | Crystal form | | | | | | | | | | Substance | | |
| Example 1 | $LiNi_{0.55}Co_{0.15}Mn_{0.3}O_2$ | 0.550 | 0.150 | Single crystal | 3.5 | 10.6 | / | / | / | 0.7 | Layered | $LiMn_{0.6}Fe_{0.4}PO_4$ | Single crystal | 0.83 | 15.3 | 12.4 | Olivine | 30% | 57% | 13.00% | 0.3 | 0.4 | Graphite | 10.2 | 1.65 |
| Example 2 | $LiNi_{0.55}Co_{0.15}Mn_{0.3}O_2$ | 0.550 | 0.150 | Single crystal | 3.5 | 10.6 | / | / | / | 0.7 | Layered | $LiMn_{0.6}Fe_{0.4}PO_4$ | Single crystal | 0.83 | 15.3 | 12.4 | Olivine | 10% | 57% | 5.70% | 0.1 | 0.1 | Graphite | 10.5 | 1.65 |
| Example 3 | $LiNi_{0.55}Co_{0.15}Mn_{0.3}O_2$ | 0.550 | 0.150 | Single crystal | 3.5 | 10.6 | / | / | / | 0.7 | Layered | $LiMn_{0.6}Fe_{0.4}PO_4$ | Single crystal | 0.83 | 15.3 | 12.4 | Olivine | 50% | 57% | 22.80% | 0.6 | 0.75 | Graphite | 9.6 | 1.65 |
| Example 4 | $LiNi_{0.55}Co_{0.15}Mn_{0.3}O_2$ | 0.550 | 0.150 | Single crystal | 3.7 | 10.8 | / | / | / | 0.7 | Layered | $LiMn_{0.6}Fe_{0.4}PO_4$ | Single crystal | 0.61 | 12.7 | 12.3 | Olivine | 30% | 57% | 13.00% | 0.3 | 0.4 | Graphite | 10.2 | 1.65 |
| Example 5 | $LiNi_{0.55}Co_{0.15}Mn_{0.3}O_2$ | 0.550 | 0.150 | Single crystal | 3.5 | 10.6 | / | / | / | 0.7 | Layered | $LiMn_{0.6}Fe_{0.4}PO_4$ | Single crystal | 0.25 | 6.1 | 13.7 | Olivine | 30% | 57% | 13.00% | 0.3 | 0.4 | Graphite | 10.2 | 1.65 |
| Example 6 | $LiNi_{0.55}Co_{0.15}Mn_{0.3}O_2$ | 0.550 | 0.150 | Single crystal | 3.5 | 10.6 | / | / | / | 0.7 | Layered | $LiMn_{0.6}Fe_{0.4}PO_4$ | Single crystal | 1.49 | 25.7 | 12 | Olivine | 30% | 57% | 13.00% | 0.3 | 0.4 | Graphite | 10.2 | 1.65 |
| Example 7 | $LiNi_{0.65}Co_{0.12}Mn_{0.23}O_2$ | 0.650 | 0.120 | Single crystal | 3.4 | 12.6 | / | / | / | 0.8 | Layered | $LiMn_{0.6}Fe_{0.4}PO_4$ | Single crystal | 0.83 | 15.3 | 12.4 | Olivine | 30% | 57% | 10.47% | 0.3 | 0.49 | Graphite | 10.3 | 1.65 |
| Example 8 | $LiNi_{0.5}Co_{0.15}Mn_{0.35}O_2$ | 0.500 | 0.150 | Single crystal | 3.5 | 8.4 | / | / | / | 0.8 | Layered | $LiMn_{0.6}Fe_{0.4}PO_4$ | Single crystal | 0.83 | 15.3 | 12.4 | Olivine | 30% | 57% | 12.51% | 0.3 | 0.41 | Graphite | 10.2 | 1.65 |
| Example 9 | $LiNi_{0.99}Co_{0.005}Mn_{0.005}O_2$ | 0.990 | 0.005 | Single crystal | 3.3 | 9.7 | / | / | / | 0.6 | Layered | $LiMn_{0.6}Fe_{0.4}PO_4$ | Single crystal | 0.83 | 15.3 | 12.4 | Olivine | 30% | 57% | 9.87% | 0.3 | 0.52 | Graphite | 10.3 | 1.65 |
| Example 10 | $LiNi_{0.5}Co_{0.2}Mn_{0.3}O_2$ | 0.500 | 0.200 | Single crystal | 3.2 | 7.4 | / | / | / | 0.7 | Layered | $LiMn_{0.6}Fe_{0.4}PO_4$ | Single crystal | 0.83 | 15.3 | 12.4 | Olivine | 30% | 57% | 13.50% | 0.3 | 0.38 | Graphite | 10.2 | 1.65 |
| Example 11 | $LiNi_{0.96}Co_{0.005}Mn_{0.035}O_2$ | 0.960 | 0.005 | Single crystal | 3.2 | 8.3 | / | / | / | 0.8 | Layered | $LiMn_{0.6}Fe_{0.4}PO_4$ | Single crystal | 0.83 | 15.3 | 12.4 | Olivine | 30% | 57% | 10.26% | 0.3 | 0.5 | Graphite | 10.3 | 1.65 |
| Example 12 | $LiNi_{0.3}Co_{0.495}Mn_{0.005}O_2$ | 0.300 | 0.495 | Single crystal | 3.8 | 11.2 | / | / | / | 0.6 | Layered | $LiMn_{0.6}Fe_{0.4}PO_4$ | Single crystal | 0.83 | 15.3 | 12.4 | Olivine | 30% | 57% | 16.03% | 0.3 | 0.32 | Graphite | 10 | 1.65 |
| Example 13 | $LiNi_{0.55}Co_{0.15}Mn_{0.3}O_2$ | 0.550 | 0.150 | Single crystal | 3.8 | 10.2 | / | / | / | 0.7 | Layered | $LiMn_{0.6}Fe_{0.4}PO_4$ | Single crystal | 0.83 | 15.3 | 12.4 | Olivine | 30% | 57% | 12.51% | 0.3 | 0.41 | Graphite | 10.2 | 1.65 |
| Example 14 | $LiNi_{0.55}Co_{0.15}Mn_{0.3}O_2$ | 0.550 | 0.150 | Single crystal | 2 | 6.5 | / | / | / | 1 | Layered | $LiMn_{0.6}Fe_{0.4}PO_4$ | Single crystal | 0.83 | 15.3 | 12.4 | Olivine | 30% | 57% | 11.93% | 0.3 | 0.43 | Graphite | 10.2 | 1.65 |
| Example 15 | $LiNi_{0.55}Co_{0.15}Mn_{0.3}O_2$ | 0.550 | 0.150 | Single crystal | 4.1 | 13.5 | / | / | / | 0.5 | Layered | $LiMn_{0.6}Fe_{0.4}PO_4$ | Single crystal | 0.83 | 15.3 | 12.4 | Olivine | 30% | 57% | 13.50% | 0.3 | 0.38 | Graphite | 10.2 | 1.65 |
| Example 16 | $LiNi_{0.8}Co_{0.1}Mn_{0.1}O_2$ | 0.800 | 0.100 | Polycrystalline | / | / | 9.1 | 22.3 | 50–600nm | 0.9 | Layered | $LiMn_{0.6}Fe_{0.4}PO_4$ | Single crystal | 0.83 | 15.3 | 12.4 | Olivine | 30% | 57% | 10.06% | 0.3 | 0.51 | Graphite | 10.3 | 1.65 |
| Example 17 | $LiNi_{0.8}Co_{0.1}Mn_{0.1}O_2$ | 0.800 | 0.100 | Polycrystalline | / | / | 7 | 15.4 | 50–600nm | 1.1 | Layered | $LiMn_{0.6}Fe_{0.4}PO_4$ | Single crystal | 0.83 | 15.3 | 12.4 | Olivine | 30% | 57% | 9.68% | 0.3 | 0.53 | Graphite | 10.4 | 1.65 |
| Example 18 | $LiNi_{0.8}Co_{0.1}Mn_{0.1}O_2$ | 0.800 | 0.100 | Polycrystalline | / | / | 13 | 26.7 | 50–600nm | 0.8 | Layered | $LiMn_{0.6}Fe_{0.4}PO_4$ | Single crystal | 0.83 | 15.3 | 12.4 | Olivine | 30% | 57% | 11.40% | 0.3 | 0.45 | Graphite | 10.3 | 1.65 |
| Example 19 | $LiNi_{0.55}Co_{0.15}Mn_{0.3}O_2$ | 0.550 | 0.150 | Single crystal | 3.5 | 10.6 | / | / | / | 0.7 | Layered | $LiMn_{0.6}Fe_{0.4}PO_4$ | Single crystal | 0.2 | 5.2 | 14.1 | Olivine | 30% | 57% | 14.87% | 0.2 | 0.23 | Graphite | 10.1 | 1.65 |
| Example 20 | $LiNi_{0.55}Co_{0.15}Mn_{0.3}O_2$ | 0.550 | 0.150 | Single crystal | 3.5 | 10.6 | / | / | / | 0.7 | Layered | $LiMn_{0.6}Fe_{0.4}PO_4$ | Single crystal | 1.6 | 33.8 | 11.3 | Olivine | 30% | 57% | 9.37% | 0.4 | 0.73 | Graphite | 10.4 | 1.65 |
| Example 21 | $LiNi_{0.3}Co_{0.3}Mn_{0.4}O_2$ | 0.300 | 0.300 | Single crystal | 3.3 | 9.2 | / | / | / | 0.7 | Layered | $LiMn_{0.6}Fe_{0.4}PO_4$ | Single crystal | 0.83 | 15.3 | 12.4 | Olivine | 30% | 57% | 16.03% | 0.3 | 0.32 | Graphite | 10 | 1.65 |
| Example 22 | $LiNi_{0.995}Co_{0.002}Mn_{0.002}O_2$ | 0.995 | 0.002 | Single crystal | 3.2 | 8.1 | / | / | / | 0.8 | Layered | $LiMn_{0.6}Fe_{0.4}PO_4$ | Single crystal | 0.83 | 15.3 | 12.4 | Olivine | 30% | 57% | 7.43% | 0.3 | 0.69 | Graphite | 10.5 | 1.65 |
| Example 23 | $LiNi_{0.83}Co_{0.002}Mn_{0.168}O_2$ | 0.830 | 0.002 | Single crystal | 3.4 | 8.2 | / | / | / | 0.8 | Layered | $LiMn_{0.6}Fe_{0.4}PO_4$ | Single crystal | 0.83 | 15.3 | 12.4 | Olivine | 30% | 57% | 7.66% | 0.3 | 0.67 | Graphite | 10.5 | 1.65 |
| Example 24 | $LiNi_{0.3}Co_{0.52}Mn_{0.18}O_2$ | 0.300 | 0.520 | Single crystal | 3.9 | 10.5 | / | / | / | 0.7 | Layered | $LiMn_{0.6}Fe_{0.4}PO_4$ | Single crystal | 0.83 | 15.3 | 12.4 | Olivine | 30% | 57% | 15.55% | 0.3 | 0.33 | Graphite | 10 | 1.65 |
| Example 25 | $LiNi_{0.55}Co_{0.15}Mn_{0.3}O_2$ | 0.550 | 0.150 | Single crystal | 1.5 | 6.4 | / | / | / | 1.2 | Layered | $LiMn_{0.6}Fe_{0.4}PO_4$ | Single crystal | 0.83 | 15.3 | 12.4 | Olivine | 30% | 57% | 11.15% | 0.3 | 0.46 | Graphite | 10.3 | 1.65 |
| Example 26 | $LiNi_{0.55}Co_{0.15}Mn_{0.3}O_2$ | 0.550 | 0.150 | Single crystal | 4.5 | 17.5 | / | / | / | 0.6 | Layered | $LiMn_{0.6}Fe_{0.4}PO_4$ | Single crystal | 0.83 | 15.3 | 12.4 | Olivine | 30% | 57% | 14.66% | 0.3 | 0.35 | Graphite | 10.1 | 1.65 |
| Example 27 | $LiNi_{0.8}Co_{0.1}Mn_{0.1}O_2$ | 0.800 | 0.100 | Polycrystalline | / | / | 6 | 14.2 | 50–600nm | 1.2 | Layered | $LiMn_{0.6}Fe_{0.4}PO_4$ | Single crystal | 0.83 | 15.3 | 12.4 | Olivine | 30% | 57% | 9.00% | 0.3 | 0.57 | Graphite | 10.4 | 1.65 |
| Example 28 | $LiNi_{0.8}Co_{0.1}Mn_{0.1}O_2$ | 0.800 | 0.100 | Polycrystalline | / | / | 14 | 28.8 | 50–600nm | 0.8 | Layered | $LiMn_{0.6}Fe_{0.4}PO_4$ | Single crystal | 0.83 | 15.3 | 12.4 | Olivine | 30% | 57% | 12.21% | 0.3 | 0.42 | Graphite | 10.2 | 1.65 |
| Example 29 | $LiNi_{0.55}Co_{0.15}Mn_{0.3}O_2$ | 0.550 | 0.150 | Single crystal | 3.5 | 10.6 | / | / | / | 0.7 | Layered | $LiMn_{0.6}Fe_{0.4}PO_4$ | Single crystal | 0.2 | 5.2 | 14.1 | Olivine | 20% | 57% | 13.68% | 0.3 | 0.25 | Graphite | 10.3 | 1.65 |
| Example 30 | $LiNi_{0.83}Co_{0.002}Mn_{0.168}O_2$ | 0.830 | 0.002 | Single crystal | 3.4 | 8.2 | / | / | / | 0.8 | Layered | $LiMn_{0.6}Fe_{0.4}PO_4$ | Single crystal | 0.83 | 15.3 | 12.4 | Olivine | 30% | 57% | 8.55% | 0.3 | 0.6 | Graphite | 10.4 | 1.65 |
| Example 31 | $LiNi_{0.55}Co_{0.15}Mn_{0.3}O_2$ | 0.550 | 0.150 | Single crystal | 3.5 | 10.6 | / | / | / | 0.7 | Layered | $LiMn_{0.65}Fe_{0.35}PO_4$ | Single crystal | 0.65 | 14.8 | 13.3 | Olivine | 30% | 40% | 11.15% | 0.4 | 0.43 | Graphite | 10.2 | 1.65 |
| Example 32 | $LiNi_{0.55}Co_{0.15}Mn_{0.3}O_2$ | 0.550 | 0.150 | Single crystal | 3.5 | 10.6 | / | / | / | 0.7 | Layered | $LiMn_{0.5}Fe_{0.5}PO_4$ | Single crystal | 0.8 | 14.4 | 12 | Olivine | 30% | 60% | 14.37% | 0.3 | 0.4 | Graphite | 10.1 | 1.65 |
| Example 33 | $LiNi_{0.55}Co_{0.15}Al_{0.3}O_2$ | 0.550 | 0.150 | Single crystal | 3.4 | 10.5 | / | / | / | 0.6 | Layered | $LiMn_{0.6}Fe_{0.4}PO_4$ | Single crystal | 0.83 | 15.3 | 12.4 | Olivine | 30% | 57% | 12.92% | 0.3 | 0.4 | Graphite | 10.2 | 1.65 |
| Example 34 | $LiNi_{0.55}Co_{0.15}Mn_{0.3}O_2$ | 0.550 | 0.150 | Single crystal | 3.5 | 10.6 | / | / | / | 0.7 | Layered | $LiMn_{0.6}Fe_{0.4}PO_4$ coated with carbon | Single crystal | 0.84 | 15.3 | 12.8 | Olivine | 30% | 57% | 14.66% | 0.3 | 0.4 | Graphite | 10.2 | 1.65 |
| Example 35 | $LiNi_{0.55}Co_{0.15}Mn_{0.3}O_2$ | 0.550 | 0.150 | Single crystal | 3.5 | 10.6 | / | / | / | 0.7 | Layered | $LiMn_{0.6}Fe_{0.4}PO_4$ | Single crystal | 0.83 | 15.3 | 12.4 | Olivine | 30% | 57% | 13.00% | 0.3 | 0.4 | Graphite | 9.5 | 1.65 |
| Example 36 | $LiNi_{0.55}Co_{0.15}Mn_{0.3}O_2$ | 0.550 | 0.150 | Single crystal | 3.5 | 10.6 | / | / | / | 0.7 | Layered | $LiMn_{0.6}Fe_{0.4}PO_4$ | Single crystal | 0.83 | 15.3 | 12.4 | Olivine | 30% | 57% | 13.00% | 0.3 | 0.4 | Graphite | 10.5 | 1.65 |
| Example 37 | $LiNi_{0.55}Co_{0.15}Mn_{0.3}O_2$ | 0.550 | 0.150 | Single crystal | 3.5 | 10.6 | / | / | / | 0.7 | Layered | $LiMn_{0.6}Fe_{0.4}PO_4$ | Single crystal | 0.83 | 15.3 | 12.4 | Olivine | 30% | 57% | 13.00% | 0.3 | 0.4 | Graphite | 10.2 | 1.6 |
| Example 38 | $LiNi_{0.55}Co_{0.15}Mn_{0.3}O_2$ | 0.550 | 0.150 | Single crystal | 3.5 | 10.6 | / | / | / | 0.7 | Layered | $LiMn_{0.6}Fe_{0.4}PO_4$ | Single crystal | 0.83 | 15.3 | 12.4 | Olivine | 30% | 57% | 13.00% | 0.3 | 0.4 | Graphite | 10.2 | 1.7 |
| Example 39 | $LiNi_{0.55}Co_{0.15}Mn_{0.3}O_2$ | 0.550 | 0.150 | Single crystal | 3.5 | 10.6 | / | / | / | 0.7 | Layered | $Li_{0.994}Mn_{0.65}Fe_{0.35}P_{0.999}Si_{0.001}O_{3.999}F_{0.001}$ | Single crystal | 0.66 | 14.8 | 13.2 | Olivine | 30% | 40% | 11.15% | 0.4 | 0.43 | Graphite | 10.2 | 1.65 |
| Example 40 | $LiNi_{0.55}Co_{0.15}Mn_{0.3}O_2$ | 0.550 | 0.150 | Single crystal | 3.5 | 10.6 | / | / | / | 0.7 | Layered | $Li_{0.977}Mg_{0.001}Mn_{0.65}Fe_{0.34}Ti_{0.01}P_{0.999}N_{0.001}O_{3.999}F_{0.001}$ | Single crystal | 0.65 | 14.8 | 13.3 | Olivine | 30% | 40% | 11.15% | 0.4 | 0.43 | Graphite | 10.2 | 1.65 |
| Example 41 | $LiNi_{0.55}Co_{0.15}Mn_{0.3}O_2$ | 0.550 | 0.150 | Single crystal | 3.5 | 10.6 | / | / | / | 0.7 | Layered | $Li_{0.992}W_{0.001}Mn_{0.65}Fe_{0.35}P_{0.999}S_{0.001}O_{3.999}F_{0.001}$ | Single crystal | 0.64 | 14.6 | 13.3 | Olivine | 30% | 40% | 11.15% | 0.4 | 0.43 | Graphite | 10.2 | 1.65 |
| Comparative Example 1 | $LiNi_{0.55}Co_{0.15}Mn_{0.3}O_2$ | 0.550 | 0.150 | Single crystal | 3.5 | 10.6 | / | / | / | 0.7 | Layered | $LiMn_{0.6}Fe_{0.4}PO_4$ | Single crystal | 0.83 | 15.3 | 12.4 | Olivine | 5% | 57% | 3% | 0.1 | 0.05 | Graphite | 10.2 | 1.65 |
| Comparative Example 2 | $LiNi_{0.55}Co_{0.15}Mn_{0.3}O_2$ | 0.550 | 0.150 | Single crystal | 3.5 | 10.6 | / | / | / | 0.7 | Layered | $LiMn_{0.6}Fe_{0.4}PO_4$ | Single crystal | 0.83 | 15.3 | 12.4 | Olivine | 70% | 57% | 30% | 0.6 | 0.8 | Graphite | 10.2 | 1.65 |

**Battery Test**

(1) Resistance measurement of positive electrode plate:
The test was performed using a BER1300 sheet resistance tester. The test steps are as follows:

a) the positive electrode plate was made into a disc with a diameter of 22 mm; and

b) the prepared disc was placed on a test platform of the BER1300 instrument for testing; the test pressure was 0.4 tons, the test temperature was 25 °C, and the test was performed for 10 s; and then the resistance value obtained was the resistance of the positive electrode plate.

(2) Determination of proportion of charge capacity below 3.7 V of second positive electrode active material relative to total charge capacity (single-particle microelectrode method):
Particles (with a Dv50 particle size of 0.25-1.49 $\mu$m) of the second positive electrode active material were dispersed on a coverslip washed successively with a washing solution (a mixture of 98 wt% $H_2SO_4$ aqueous solution and 30 wt% hydrogen peroxide in a volume ratio of 3:1) and deionized water.

The microelectrode was a platinum wire encapsulated in a glass capillary, with the platinum wire having a diameter of 10 $\mu$m. The radius ratio of the glass capillary to the platinum wire was less than 5. The end surface of the platinum wire was polished into a needle-like shape, and the platinum wire was connected to a copper wire via conductive silver adhesive. Before the test, the microelectrode needed to be placed in a 0.5 mol/L $H_2SO_4$ aqueous solution for cyclic voltammetry scanning, with a scanning rate of 50 mV/s and a scanning potential range of -0.22 V to 1.22 V (vs. SCE), to remove residual impurities on the microelectrode.
The single-particle microelectrode test device mainly includes a microelectrode, a microscope, a micromanipulator, and an electrochemical workstation. By combining the micromanipulator with the microscope, the microelectrode was moved to make contact with a single particle of the second positive electrode active material. An electrochemical test was then performed using the single particle as a working electrode, a lithium ribbon as a counter electrode and a reference electrode, and ethylene carbonate (EC) and propylene carbonate (PC) (in a volume ratio of 1:1) containing 1 mol/L $LiPF_6$ as the electrolytic solution, and the electrochemical test temperature was 25 °C. During charging, a constant current of 0.33 C was applied until the voltage reached 4.4 V, at which point the charging switched to constant voltage charging, and the constant voltage charging ended when the charging current decreased to 0.05 C; subsequently, discharging was performed at 0.33 C until the full discharge voltage of 2.5 V was reached. The capacity-voltage curve for the discharging process was taken, where the X-axis represents the charge capacity, the Y-axis represents the voltage, the charge capacity corresponding to the voltage of 3.7 V is Q3, and the full discharge voltage of 2.5 V corresponds to the total charge capacity Q4. The proportion B of the charge capacity with a voltage below 3.7 V relative to the total charge capacity was calculated according to the following formula.

$$B(\%) = 100 \times (Q4 - Q3)/Q4$$

(3) Determination of proportion of charge capacity below 3.7 V of battery relative to total charge capacity:

The soft-pack laminated battery was tested, and the operation was as follows: the test environment temperature was 25 °C; during charging, a constant current of 0.33 C was applied until the voltage reached 4.4 V, at which point the charging switched to constant voltage charging, and the constant voltage charging ended when the charging current decreased to 0.05 C; subsequently, discharging was performed at 0.33 C until the full discharge voltage of 2.5 V was reached. This process was repeated 3 times, and the capacity-voltage curve for the third discharging process was taken, where the X-axis represents the charge capacity, the Y-axis represents the voltage, the charge capacity corresponding to the voltage of 3.7 V is Q1, and the full discharge voltage of 2.5 V corresponds to the total charge capacity Q2. The proportion C of the charge capacity below 3.7 V of the battery relative to the total charge capacity was calculated according to the following formula.

$$C(\%) = 100 \times (Q2 - Q1)/Q2$$

(4) Test of crystal type and particle size of primary particles of polycrystalline material:

Unless otherwise specified, the term "single crystal/single-crystal-like particle" in the present application refers to a single particle (i.e., a primary particle).

Unless otherwise specified, the terms "secondary particle" and "polycrystalline material particle" in the present application generally have similar meanings, referring to a particle formed by agglomeration of more than 100 primary particles with an average particle size in the range of 50-800 nm.

The positive electrode active material was tested using a scanning electron microscope. A sample and the magnification were adjusted, such that the field of view contained more than 10 agglomerated particles; the number of primary particles composing each agglomerated particle was counted, and the size of the primary particle in a length direction was measured using a scale and recorded as the particle size; the particle sizes of the primary particles in each agglomerated particle were sorted from large to small; and 1/10 of the maximum particle size data and 1/10 of the minimum particle size data were excluded, and the average of the remaining particle size data was taken as the average particle size of the primary particles in the agglomerated particle. If the number and average particle size of the primary particles in more than 50% (including 50%) of the agglomerated particles meet the definition of "polycrystalline material particle" described above, the positive electrode active material was determined to be a polycrystalline material; otherwise, it was determined to be a single crystal or single-crystal-like material.

The average particle size of the primary particles of the polycrystalline material was recorded as the particle size of the primary particles.

(5) Particle size distribution test:

The $D_v50$ particle size and Dv99 particle size of single crystal particles or single-crystal-like particles and secondary particles were measured according to the method in the national standard GB/T 19077-2016 "Particle Size Analysis - Laser Diffraction Methods". Deionized water was used as the solvent, and ultrasonic treatment was performed for 5 min before the test.

(6) BET specific surface area test:

The test environment temperature was 25 °C, and the BET specific surface area of the powder was measured according to the method in the national standard GB/T 19587-2004 "Determination of the Specific Surface Area of Solids by Gas Adsorption Using the BET Method". Before the test, the powder was placed in a vacuum oven at 200 °C and dried for no less than 2 h. Over 20 g of the required amount of powder was weighed out.

(7) Test of charging time at 10%-80% SOC:

Under a constant temperature environment of 25 °C, the soft-pack laminated batteries were subjected to charging tests at different rates (C1 < C2 < C3 < C4<...< Cn), and the charging rate during the test was in an increasing order. During charging, the voltage of the soft-pack laminated batteries at full charge and the voltage of the negative electrode of the soft-pack laminated batteries were monitored simultaneously. The specific process was as follows: the soft-pack laminated batteries were charged at C1 until the full charge voltage of 4.4 V was reached or the negative electrode voltage reached 0 V; the SOC value of the batteries at the end of charging was obtained, and the batteries were then allowed to discharge at 0.33 C to the full discharge voltage of 2.5 V; the process described above was repeated according to the charging rates in an increasing order, and the SOC values at the end of charging at different rates were be obtained; the SOC values at the end of charging were fitted with the corresponding rate values to obtain a relationship between the SOC at the end of charging and the rate value; 20% SOC, 30% SOC, 40% SOC, 50% SOC, 60% SOC, 70% SOC, and 80% SOC were substituted into the relationship to obtain the corresponding rates C20%, C30%, C40%, C50%, C60%, C70%, and C80%; and the charging time (min) at 10%-80% SOC was calculated according to the following formula;

$$\text{charging time at 10\%-80\% SOC} = (60/C20\% + 60/C30\%+...+ 60/C80\%) \times 10\%.$$

(8) Cycle life test:

Under a constant temperature environment of 25 °C, the battery was charged from 2.5 V to 4.25-4.3 V at 0.5 C, and then charged at a constant voltage of 4.25-4.3 V until the current reached $\leq 0.05$ mA; the battery was left to stand for 5 min, and then allowed to discharge at 0.5 C to 2.5 V; the discharge capacity of the first cycle of the battery was recorded as $D_1$; the operation described above was repeated, and the discharge capacity of each cycle was recorded as $D_n$ (n = 2, 3...);

and the state of health (SOH) of the battery cell was calculated according to the following formula, and the number of cycles n was recorded when the state of health reached 80% SOH.

$$\text{State of health of battery cell} = 100\% \times Dn/D3$$

(9) Density test of negative electrode film layer:

At room temperature, a disc-shaped negative electrode current collector with an area of 10 mm$^2$ and a thickness of d1 (mm) was taken and weighed, and the weight was recorded as m1 (g); a negative electrode current collector having the same material and thickness, with a length of 10 m and a width of 200 mm, was taken, and front and back surfaces of the negative electrode current collector were coated with the foregoing negative electrode slurry, followed by drying and cold pressing at 30-40 T to obtain a negative electrode plate, which included the negative electrode current collector and a negative electrode film layer applied on the negative electrode current collector; starting from one end of the electrode plate, 10 mm$^2$ discs were taken at a length of 1 m, 3 m, 5 m, 7 m, and 9 m; the discs were weighed, and the weights were recorded as m2-m6 (g); the average weight $m_s$ (g) of the discs were calculated; the thicknesses d2-d6 (mm) of the discs were measured, and the average thickness $d_s$ (mm) of the discs was calculated; and the density (g/cm$^3$) of the negative electrode film layer was calculated according to the following formula.

$$\text{Density of negative electrode film layer} = 1000 \times \frac{m_s - m1}{10 \times (d_s - d1)}$$

(10) Test of charging CB data:

The positive electrode plate and the negative electrode plate were separately assembled into button batteries (a metallic lithium foil was used for the negative electrode); the test conditions for the button battery with the positive electrode plate were as follows: charge and discharge at 0.1 C within a range of 2.5-4.45 V at 25 °C, and the capacity of the button battery with the positive electrode plate was obtained, which was divided by the mass of the positive electrode active material to obtain the specific capacity of the positive electrode active material Q1 (mAh/g); the test conditions for the button battery with the negative electrode plate were as followed: charge and discharge at 0.1 C within a range of 0.005-2.0 V at 25 °C, and the capacity of the button battery with the negative electrode plate was obtained, which was divided by the mass of the negative electrode active material to obtain the specific capacity of the negative electrode active material Q2 (mAh/g).

At room temperature, a disc-shaped positive electrode current collector with an area of 10 mm$^2$ was taken and weighed, and the weight was recorded as m1 (g); a disc-shaped negative electrode current collector with an area of 10 mm$^2$ was taken and weighed, and the weight was recorded as m12 (g); a positive electrode current collector having the same material and thickness, with a length of 10 m and a width of 200 mm was taken, and front and back surfaces of the positive electrode current collector were coated with the foregoing positive electrode slurry, followed by drying and cold pressing to obtain a positive electrode plate, which included the positive electrode current collector and a positive electrode film layer applied on the positive electrode current collector, and the content of the positive electrode active material in the positive electrode film layer was W1; a negative electrode current collector having the same material and thickness, with a length of 10 m and a width of 200 mm, was taken, and front and back surfaces of the negative electrode current collector were coated with the foregoing negative electrode slurry, followed by drying and cold pressing to obtain a negative electrode plate, which included the negative electrode current collector and a negative electrode film layer applied on the negative electrode current collector, and the content of the negative electrode active material in the negative electrode film layer was W2; starting from one end of the positive electrode plate/negative electrode plate, 10 mm$^2$ discs were taken at a length of 1 m, 3 m, 5 m, 7 m, and 9 m; the positive electrode discs were weighed, the weights were recorded as m2-m6 (g), and the average weight $m_{s1}$ (g) of the positive electrode discs were calculated; and the negative electrode discs were weighed, the weights were recorded as m7-m11 (g), and the average weight $m_{s2}$ (g) of the negative electrode discs were calculated.

The charging CB value was calculated according to the following formula.

ChargingCBvalue = $(m_{s2}/10 - m12/10) \times Q2 \times W2/[(m_{s1}/10 - m1/10) \times Q1 \times W1]$

(11) Test of lithium plating:

The cycled soft-pack laminated batteries in item (8) described above were charged at a constant current of 0.33 C until the full charge voltage of 4.4 V was reached, and then charged at a constant voltage, and the charging ended when the charging current decreased to 0.05 C. The batteries were disassembled at a relative humidity of 2% to observe whether a silver-white metal was precipitated on the surface of the negative electrode. If so, lithium plating was present, otherwise there was no lithium plating.

Table 2: Performance test results of Examples 1-41 and Comparative Examples 1-2

|  | Cycle life (cycles) | Charging time at 10%-80% SOC (min) | Charging CB | Lithium plating |
|---|---|---|---|---|
| Example 1 | 1338 | 22 | 1.07 | No lithium plating |
| Example 2 | 1175 | 27 | 1.07 | No lithium plating |
| Example 3 | 1137 | 27 | 1.07 | No lithium plating |
| Example 4 | 1267 | 23 | 1.07 | No lithium plating |
| Example 5 | 1076 | 23 | 1.07 | No lithium plating |
| Example 6 | 1189 | 25 | 1.07 | No lithium plating |
| Example 7 | 1231 | 22 | 1.07 | No lithium plating |
| Example 8 | 1046 | 23 | 1.07 | No lithium plating |
| Example 9 | 1029 | 25 | 1.07 | No lithium plating |
| Example 10 | 1274 | 21 | 1.07 | No lithium plating |
| Example 11 | 1058 | 26 | 1.07 | No lithium plating |
| Example 12 | 1039 | 24 | 1.07 | No lithium plating |
| Example 13 | 1312 | 23 | 1.07 | No lithium plating |
| Example 14 | 1057 | 22 | 1.07 | No lithium plating |
| Example 15 | 1132 | 25 | 1.07 | No lithium plating |
| Example 16 | 1224 | 23 | 1.07 | No lithium plating |
| Example 17 | 1038 | 21 | 1.07 | No lithium plating |
| Example 18 | 1069 | 24 | 1.07 | No lithium plating |
| Example 19 | 846 | 24 | 1.07 | No lithium plating |
| Example 20 | 912 | 27 | 1.07 | No lithium plating |
| Example 21 | 801 | 28 | 1.07 | No lithium plating |
| Example 22 | 835 | 27 | 1.07 | No lithium plating |
| Example 23 | 783 | 27 | 1.07 | No lithium plating |
| Example 24 | 873 | 24 | 1.07 | No lithium plating |
| Example 25 | 821 | 26 | 1.07 | No lithium plating |
| Example 26 | 853 | 27 | 1.07 | No lithium plating |
| Example 27 | 777 | 21 | 1.07 | No lithium plating |
| Example 28 | 791 | 25 | 1.07 | No lithium plating |
| Example 29 | 1043 | 23 | 1.07 | No lithium plating |
| Example 30 | 982 | 25 | 1.07 | No lithium plating |
| Example 31 | 1012 | 26 | 1.07 | No lithium plating |
| Example 32 | 980 | 25 | 1.07 | No lithium plating |
| Example 33 | 1173 | 23 | 1.07 | No lithium plating |
| Example 34 | 1256 | 21 | 1.07 | No lithium plating |
| Example 35 | 995 | 20 | 1 | No lithium plating |

(continued)

|  | Cycle life (cycles) | Charging time at 10%-80% SOC (min) | Charging CB | Lithium plating |
|---|---|---|---|---|
| Example 36 | 1054 | 25 | 1.1 | No lithium plating |
| Example 37 | 1064 | 20 | 1.07 | No lithium plating |
| Example 38 | 1037 | 25 | 1.07 | No lithium plating |
| Example 39 | 1159 | 25 | 1.07 | No lithium plating |
| Example 40 | 1208 | 24 | 1.07 | No lithium plating |
| Example 41 | 1165 | 26 | 1.07 | No lithium plating |
| Comparative Example 1 | 614 | 29 | 1.07 | No lithium plating |
| Comparative Example 2 | 638 | 31 | 1.07 | No lithium plating |

According to the results described above, it can be seen that:

Compared with Comparative Examples 1-2, the batteries made of the positive electrode active materials in the examples of the present application have better fast-charging performance and longer cycle life;

compared with Examples 20-23 and 26, the fast-charging performance of the batteries made of the positive electrode materials in Examples 1, 4-11, 13-18, and 31-38 of the present application is further improved, and the cycle life is further extended;

compared with Examples 2-3, the fast-charging performance of the batteries made of the positive electrode materials in Examples 1, 4-11, 13-18, and 31-38 of the present application is further improved;

compared with Examples 12, 19, 24-25, and 27-28, the cycle life of the batteries made of the positive electrode materials in Examples 1, 4-11, 13-18, and 31-38 of the present application is further extended.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A battery, comprising a positive electrode plate, wherein the positive electrode plate comprises a first positive electrode active material and a second positive electrode active material, wherein

the first positive electrode active material comprises a compound, $Li_aNi_bCo_cM1_dM2_eO_fE_g$, wherein
M1 comprises one or two elements of Mn and Al;
M2 comprises one or more elements of Zr, Zn, Cu, Cr, Mg, Fe, V, Ti, Sr, Sb, Y, W, and Nb;
E comprises one or more elements of N, F, S, and Cl;

$0.75 \leq a \leq 1.2$; $0 < b < 1$; $0 < c < 1$; $0 < d < 1$; $0 \leq e \leq 0.2$; $1 \leq f \leq 2.5$, $0 \leq g \leq 1$, and $f + g \leq 3$;

the second positive electrode active material comprises a compound, $Li_xH_yMn_{1-z}Q_zP_{1-m}G_mO_{4-n}D_n$, wherein
H comprises one or more elements selected from Zn, Al, Na, K, Mg, Nb, Mo, and W;
Q comprises one or more elements selected from Zn, Al, Na, K, Mg, Mo, W, Ti, V, Zr, Fe, Ni, Co, Ga, Sn, Sb, Nb, and Ge;
G comprises one or more elements selected from B, Si, N, S, F, Cl, and Br;

D comprises one or more elements selected from S, F, Cl, and Br;
x is 0.9 to 1.1; y is 0 to 0.1; z is 0.001 to 0.9; m is 0 to 0.1; n is 0 to 0.1;
furthermore, the battery satisfies:

$$0.1 < \frac{A \times B}{C} \times R \leq 0.75$$

wherein

A represents a mass percentage of the second positive electrode active material in the two positive electrode active materials;
B represents a proportion of charge capacity below 3.7 V of the second positive electrode active material relative to the total charge capacity as measured by a single-particle microelectrode method;
C represents a proportion of charge capacity below 3.7 V of the battery relative to the total charge capacity;
R represents a resistance of the positive electrode plate at 25 °C in $\Omega$.

2. The battery according to claim 1, wherein

$$0.25 \leq \frac{A \times B}{C} \times R \leq 0.6;$$

optionally,

$$0.3 \leq \frac{A \times B}{C} \times R \leq 0.55.$$

3. The battery according to claim 1 or 2, wherein

A is 0.1 to 0.5, optionally 0.1 to 0.3, and more optionally 0.2 to 0.3; and/or
B is 0.4 to 0.6, optionally 0.5 to 0.6; and/or
C is 0.05 to 0.23, optionally 0.09 to 0.16; and/or
0 < R < 1, optionally 0.1 to 0.6, and more optionally 0.2 to 0.4.

4. The battery according to any one of claims 1 to 3, wherein in the second positive electrode active material, Q comprises one or more elements of Fe, Ti, V, Ni, Co, and Mg; and/or

G comprises one or more elements of B, Si, N, and S; and/or
x is 0.977 to 1; and/or
y is 0 to 0.001; and/or
z is 0.1 to 0.9 or 0.001 to 0.6, optionally 0.3 to 0.7; and/or
m is 0 to 0.001 or 0.001 to 0.1; and/or
n is 0 to 0.001 or 0.001 to 0.1.

5. The battery according to any one of claims 1 to 4, wherein in the first positive electrode active material, a is 0.9 to 1.1; and/or

d is 0.003 to 0.4; and/or
b is 30% to 99.5%, optionally 50% to 99%, and more optionally 55% to 88%; and/or
c is 0.2% to 52%, optionally 0.5% to 49.5%, and more optionally 5% to 35%.

6. The battery according to any one of claims 1 to 5, wherein the first positive electrode material is a single crystal or single-crystal-like material and satisfies:

single crystal particles or single-crystal-like particles have a $D_v50$ particle size of 1.5 to 4.5 $\mu$m, optionally 2 to 4.1 $\mu$m; and/or
the single crystal particles or the single-crystal-like particles have a $D_v99$ particle size of $\leq 18$ $\mu$m, optionally 6.4 to 17.5 $\mu$m, and more optionally 6.5 to 13.5 $\mu$m; and/or
a BET specific surface area of the first positive electrode active material is 0.42 to 1.2 $m^2$/g, optionally 0.5 to 1 $m^2$/g.

7. The battery according to any one of claims 1 to 5, wherein the first positive electrode active material is a polycrystalline material and satisfies:

   secondary particles have a Dv50 particle size of 6 to 14 $\mu$m, optionally 7 to 13 $\mu$m; and/or
   the secondary particles have a Dv99 particle size of < 30 $\mu$m, optionally 14.2 to 28.8 $\mu$m, and more optionally 15.4 to 26.7 $\mu$m; and/or
   primary particles have a particle size of 50 to 800 nm, optionally 50 to 600 nm; and/or
   a BET specific surface area of the first positive electrode active material is 0.8 to 1.2 $m^2$/g, optionally 0.8 to 1.1 $m^2$/g.

8. The battery according to any one of claims 1 to 7, wherein the second positive electrode active material is a single crystal or single-crystal-like material and satisfies:

   single crystal particles or single-crystal-like particles have a $D_v$50 particle size of 0.2 to 1.6 $\mu$m, optionally 0.25 to 1.49 $\mu$m; and/or
   the single crystal particles or the single-crystal-like particles have a $D_v$99 particle size of 5.2 to 33.8 $\mu$m, optionally 6.1 to 25.7 $\mu$m; and/or
   a BET specific surface area of the second positive electrode active material is 11.3 to 14.1 $m^2$/g, optionally 12 to 13.7 $m^2$/g.

9. The battery according to any one of claims 1 to 8, wherein the first positive electrode active material has a layered structure; and/or the second positive electrode active material has an olivine structure.

10. The battery according to any one of claims 1 to 9, wherein

    the first positive electrode active material comprises a core and a cladding layer coating the core, wherein the core is the compound $Li_aNi_bCo_cM1_dM2_eO_fE_g$; and/or
    the second positive electrode active material comprises a core and a cladding layer coating the core, wherein the core is the compound $Li_xH_yMn_{1-z}Q_zP_{1-m}G_mO_{4-n}D_n$;
    optionally, the cladding layers in the first positive electrode active material and the second positive electrode active material independently comprise one or more of pyrophosphate, phosphate, and carbon.

11. The battery according to claim 10, wherein a mass proportion of the cladding layer in the second positive electrode active material is 0.5% to 2.2%, optionally 1% to 1.9%, and more optionally 1.2% to 1.5%;
    optionally, the cladding layer in the second positive electrode active material is carbon.

12. An electric device, comprising the battery according to any one of claims 1 to 11.

5

FIG. 1

5

53

52
52

51

FIG. 2

4    5    5

5

FIG. 3

24

1

FIG. 4

1

2

4 4 4

4

4

4

3

FIG. 5

FIG. 6

## INTERNATIONAL SEARCH REPORT

| | International application No. |
| --- | --- |
| | **PCT/CN2024/070831** |

| A. | CLASSIFICATION OF SUBJECT MATTER |
| --- | --- |
| | H01M 4/485(2010.01)i |

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, VCN, DWPI, VEN: 电池, 正极, 阴极, 活性物质, 锂镍钴锰, 磷酸锰锂铁, 磷位, 氧位, D50, 粒径, BET, 比表面积, battery, positive, electrode, cathode, Ni, Co, Mn, Fe, Li, phosphorus, site, oxygen, particle, size

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116759568 A (NINGDE CONTEMPORARY AMPEREX TECHNOLOGY CO., LTD.) 15 September 2023 (2023-09-15) claims 1-12 | 1-12 |
| X | CN 114730910 A (NINGDE CONTEMPORARY AMPEREX TECHNOLOGY CO., LTD.) 08 July 2022 (2022-07-08) embodiment table 1, and description, paragraphs [0098]-[0114] | 1-12 |
| Y | CN 103811727 A (SHANGHAI AEROSPACE POWER TECHNOLOGY CO., LTD.) 21 May 2014 (2014-05-21) description, paragraphs [0003] and [0009]-[0027] | 1-12 |
| Y | CN 105118985 A (PULEAD TECHNOLOGY INDUSTRY CO., LTD.) 02 December 2015 (2015-12-02) description, paragraphs [0008]-[0062] | 1-12 |
| A | CN 104577115 A (QINGHAI CONTEMPORARY AMPEREX TECHNOLOGY LTD.) 29 April 2015 (2015-04-29) description, paragraphs [0005]-[0074] | 1-12 |

☑ Further documents are listed in the continuation of Box C.　☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **14 March 2024** | **25 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

<table>
<tr><td colspan="2">International application No.</td></tr>
<tr><td colspan="2">**PCT/CN2024/070831**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | CN 102427123 A (DONGGUAN AMPEREX TECHNOLOGY LIMITED et al.) 25 April 2012 (2012-04-25)<br>    description, paragraphs [0005]-[0047] | 1-12 |
| A | US 2022093921 A1 (CONTEMPORARY AMPEREX TECHNOLOGY CO., LTD.) 24 March 2022 (2022-03-24)<br>    entire document | 1-12 |

Form PCT/ISA/210 (second sheet) (July 2022)

## INTERNATIONAL SEARCH REPORT
### Information on patent family members

International application No.

**PCT/CN2024/070831**

| Patent document cited in search report | | | Publication date (day/month/year) | Patent family member(s) | | | Publication date (day/month/year) |
|---|---|---|---|---|---|---|---|
| CN | 116759568 | A | 15 September 2023 | None | | | |
| CN | 114730910 | A | 08 July 2022 | WO | 2022032624 | A1 | 17 February 2022 |
| | | | | EP | 4120408 | A1 | 18 January 2023 |
| | | | | EP | 4120408 | A4 | 07 June 2023 |
| | | | | US | 2023075325 | A1 | 09 March 2023 |
| | | | | US | 11804590 | B2 | 31 October 2023 |
| CN | 103811727 | A | 21 May 2014 | None | | | |
| CN | 105118985 | A | 02 December 2015 | None | | | |
| CN | 104577115 | A | 29 April 2015 | JP | 2016127002 | A | 11 July 2016 |
| | | | | JP | 6157563 | B2 | 05 July 2017 |
| | | | | US | 2016190584 | A1 | 30 June 2016 |
| CN | 102427123 | A | 25 April 2012 | None | | | |
| US | 2022093921 | A1 | 24 March 2022 | PT | 3951977 | T | 07 June 2023 |
| | | | | ES | 2946079 | T3 | 12 July 2023 |
| | | | | EP | 3951977 | A1 | 09 February 2022 |
| | | | | EP | 3951977 | A4 | 03 August 2022 |
| | | | | EP | 3951977 | B1 | 03 May 2023 |
| | | | | WO | 2021088718 | A1 | 14 May 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310229296